# EUROPEAN PATENT APPLICATION

(11) **EP 4 783 000 A1**
(43) Date of publication of application: **29.07.2026**
(21) Application number: 25154491.2
(22) Date of filing: 28.01.2025
(51) Int. Cl.: G06F 9/48, G06F 9/50

(54) **GENERATION OF A JOB SCHEDULE BASED ON COMPUTATION RESOURCE ESTIMATION**

(71) Applicant: Siemens Aktiengesellschaft, 80333 München (DE)
(72) Inventor: Jansch dos Santos Rocha, Marcos, 80797 München (DE); Ulrich, Andreas, 81245 München (DE)
(74) Representative: Siemens Patent Attorneys

(57) **Abstract**

The invention relates to a computer-implemented method for scheduling computation jobs (1a) within a computation system (2). The method comprises
- providing at least one historic dataset (4a), each comprising a historic set of characteristics (5b) of a respective historic computation job (1b) and at least one historic computation resource (6b) assigned to it;
- providing a plurality of sets of characteristics (5a), each describing one computation job (1a);
- estimating (7) at least one respective computation resource (6a) for each computation job (1a) depending on the set of characteristics (5a) of the respective computation job (1a) and on the at least one historic dataset (4a); and
- generating (8) a job schedule (9a) depending on the estimated at least one computation resources (6a), comprising a priority ranking (10a) for each computation job (1a) and/or an assignment (11a) of each computation job (1a) to a respective computing unit (3).

## Description

The invention relates to a computer-implemented method for scheduling a plurality of computation jobs within a computation system comprising at least one computing unit.

Additionally, the invention relates to a computer-implemented method for executing a plurality of computation jobs within a computation system and a computer-implemented training method for training an estimating agent for estimating at least one respective computation resource for each computation job of the plurality of computation jobs. Moreover, the invention relates to a data processing system, which is configured to carry out one of the computer-implemented methods and a computer program product.

The generation of a job schedule for an execution of a plurality of computation jobs is a complex optimization problem especially considering that computation resources of a computation system are limited and that a number and a complexity of the computation jobs increase with increasing degree of digitalization. If the required computation resources for the plurality of computation jobs exceed the available computation resources, for example priorities need to be defined or an appropriate sequence of execution. On the other hand, available computation resources shall not remain unused or not be acquired in the first place if not necessary for the execution of a plurality of computation jobs.

Current solutions with a static job schedule, which is based on a manually configured standardized computation system, are known. Such solutions may not make an efficient usage of the available computation resources or may fail to execute an individual computation job on time.

It is an objective of the present invention to optimize the scheduling of a plurality of computation jobs on a computation system, in particular in terms of punctuality and/or effective use of available computation resources.

This objective is achieved by the subject matter of the independent claim. Further implementations and preferred embodiments are subject matter of the dependent claims.

The invention is based on the idea to estimate at least one computation resource for each computation job of the plurality of computation jobs depending on at least one historic dataset and to generate a job schedule for the plurality of computation jobs depending on the estimation of the required computation resources.

According to an aspect of the invention, a computer-implemented method for scheduling a plurality of computation jobs within a computation system comprising at least one computing unit is provided. The method comprises providing at least one historic dataset, wherein each historic dataset of the at least one historic dataset comprises a historic set of characteristics of a respective historic computation job and at least one historic computation resource assigned to the respective historic computation job. Next to that, the method comprises providing a plurality of sets of characteristics, wherein each set of characteristics describes one computation job of the plurality of computation jobs. Additionally, the method comprises estimating at least one respective computation resource for each computation job of the plurality of computation jobs depending on the set of characteristics of the respective computation job and on the at least one historic dataset. Subsequently, the method comprises generating a job schedule depending on the estimated at least one computation resources of the plurality of computation jobs, wherein the job schedule comprises a priority ranking for each computation job of the plurality of computation jobs and/or the job schedule comprises an assignment of each computation job of the plurality of computation jobs to a respective computing unit of the at least one computing unit.

Unless stated otherwise, all steps of the computer-implemented method may be performed by a data processing system, which comprises at least one data processing device, in particular a data processing system of the computation system. In particular, the at least one data processing device is configured or adapted to perform the steps of the computer-implemented method. For this purpose, the at least one data processing device may for example store a computer program comprising instructions which, when executed by the at least one data processing device, cause the at least one data processing device to carry out the computer-implemented method.

All data processing devices of the at least one data processing device may be comprised by the computation system. However, it is also possible that all data processing devices of the at least one data processing device are part of an external computation system external to the computation system, for example a backend server or a cloud computing system.

In case the at least one data processing device comprises two or more data processing devices, certain steps carried out by the at least one data processing device may be understood such that different data processing devices carry out different steps or different parts of a step. In particular, it is not required that each data processing device carries out the steps completely. In other words, carrying out the steps may be distributed amongst the two or more data processing devices.

The computation job may be a piece of work, which is prepared to be executed on a computation system and may for example involve processing data and performing calculations. The computation job may for example comprise at least one computation task and/or at least one computation step. The computation job may for example be of a recurrent type, which means that an identical or a similar computation job has already been completed previously or will be prepared for execution in the future. Information about the previous execution of the identical or similar computation job may be available to the computation system, for example within the at least one historic dataset. The computation job may also be of a one-time type, which means that none of the previously completed jobs is similar in terms of the set of characteristics.

Each set of characteristics may, in other words, comprise a number of properties of the respective computation job that describe the respective computation job. Each set of characteristics may comprise for example an identification number, a category, a deadline, a deadline requirement, an origin, a priority, a file size, a number of characters, a number of variables, a dependency, an application type, a creation time stamp and/or an author. A total number of the plurality of sets of characteristics may be identical with a total number of the plurality of computation jobs, so that each set of characteristics may be assigned to a respective computation job. In particular, at least one of the plurality of sets of characteristics may initially be empty or at least one of the plurality of computation jobs may initially lack the respective set of characteristics. In this case, the computer-implemented method may comprise choosing a predefined default set of characteristics for the respective computation job.

The deadline requirement may for example comprise a value for
- a fixed deadline, which shall not be changed;
- a best effort deadline, which indicates to execute the respective computation job whenever possible;
- an earliest deadline, which indicates to execute the respective computation job at an earliest point in time;
- a target deadline, which indicates to execute the respective computation job at a predefined point in time.

The at least one historic dataset may for example have been created from previous executions of the respective historic computation job. The at least one historic computation resource may be a result of the previous execution and may serve as a reference for the estimation of the at least one computation resource of the plurality of computation jobs. Alternatively, the at least one historic dataset may have been created depending on an evaluation or simulation of the respective historic computation job. In particular, a number of datasets of the at least one historic dataset may be a large number of datasets, for example the number may be larger than 10 datasets, in particular larger than 100 datasets.

A computer-implemented initialization method may have been carried out prior to the computer-implemented method. In particular, the computer-implemented initialization method may differ from the computer-implemented method with respect to the provision of the at least one historic dataset. In particular, the computer-implemented initialization method may comprise a number of the plurality of computation jobs, which is exactly one. For example, the computer-implemented initialization method may comprise all other features of the computer-implemented method and in particular comprise estimating the at least one respective computation resource for each computation job of the plurality of computation jobs depending on the set of characteristics of the respective computation job. The estimation may be based on a "best guess" approach or on a predefined value of the at least one respective computation resource. Alternatively, the computer-implemented initialization method may comprise generating the job schedule without prior estimating of the at least one respective computation resource. In this case, the job schedule may be generated based on a conventional approach. The computer-implemented initialization method may also be a part of the computer-implemented method for scheduling a plurality of computation jobs according to the invention.

The computation system may comprise or be a data processing system. The data processing system carrying out the computer-implemented method may or may not be comprised by the computation system. The terms "data processing system" and "at least one data processing device" may be used interchangeably in the present disclosure. In the present disclosure, a data processing device, also denoted as computing device, may for example be understood as a device with processing circuitry for processing data. A data processing device can therefore perform computing operations in order to process data. An indexed access to a data structure, for example a look-up table, LUT, or a database may also be considered as a computing operation. Data processing that is partially or fully implemented in hardware can also be considered a computing operation.

In particular, a data processing device may include one or more computers, one or more microcontrollers, and/or one or more integrated circuits, for example, one or more applicationspecific integrated circuits, ASIC, one or more field-programmable gate arrays, FPGA, and/or one or more systems-on-a-chip, SoC. A data processing device may also include one or more processors, for example one or more microprocessors, one or more central processing units, CPU, one or more graphics processing units, GPU, and/or one or more signal processors, in particular one or more digital signal processors, DSP. The data processing device may also include a physical or a virtual cluster of computers or other of said devices.

A data processing device may also comprise one or more hardware and/or software interfaces, for example for receiving and/or providing data, respectively.

A data processing device may also comprise one or more memory devices. Therein, a memory device may be implemented as a volatile memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

The at least one computing unit may comprise at least one physical machine, for examples a backend server, a workstation or a desktop computer, or alternatively at least one virtual machine. The at least one computing unit may also comprise a combination of at least one physical machine and at least one virtual machine. The at least one virtual machine may be an emulation of a computer system that runs software in isolation from a physical hardware it is running on. In this case, said physical hardware may also be considered to be part of the respective computing unit or the computation system. This isolation allows two or more virtual machines to run on a single host machine simultaneously, each with its own operating system and applications. The at least one virtual machine may run within a cloud infrastructure, provided as part of an Infrastructure as a Service (laaS) offering.

According to several implementations, the at least one computing unit comprises at least one virtual machine, wherein each virtual machine of the at least one virtual machine comprises a configuration. The method comprises adjusting a number of the at least one virtual machine and/or adjusting the configuration of each virtual machine of the at least one virtual machine depending on the at least one computation resources of the plurality of computation jobs.

A number of the at least one virtual machine may be configurable and may change dynamically over time.

The estimation of the respective computation resource may be based on the comparison of the respective computation job to every historic computation job, which are included in the at least one historic dataset. A relevant criterion for the comparison may be the set of characteristics of the respective computation job and each historic set of characteristics. In particular, the respective computation job may require the at least on computation resource, which is similar or identical to the at least one historic computation resource of a specific historic computation job if the respective set of characteristics is similar or identical to respective historic set of characteristics. In particular, there may be differences between the respective set of characteristics and the respective historic set of characteristics, for example the number of variables, may be different. Then the estimation may be based on the at least one respective historic computation resource but extrapolate the at least one computation resource considering the differences. Additionally, the estimation may be based on two or more at least one historic computation resources for example when a first historic set of characteristics may resemble a first reference to a low value for the at least one computation resource and a second historic set of characteristics may resemble a second reference to an upper value for the at least one computation resource.

The job schedule may be generated after the estimation of each at least one computation resource of the plurality of computation jobs is completed. The completion of the estimation may lead to an overview of requirements and execution deadlines and thus may be the base for generating the priority ranking and/or the assignment to the respective computing unit. The generation of the job schedule may also be a continuous task, which may start with the completion of a first availability of the at least one computation resource of a first computation job and the job schedule may increase with each completion of a further availability of the at least one computation resource of a further computation job. As such the generation may be understood as an iterative process.

The job schedule may for example include an identification number for the respective computation job. The priority ranking may for example specify a respective relative start time or a respective absolute start time of the plurality of computation jobs and/or a sequence of the plurality of computation jobs. The absolute start time may consider a cost of an execution of the respective computation job for example at a specific time of day or day or week, for example for using off-peak periods for the execution of a specific computation job with an uncritical deadline.

The assignment to a respective computing unit of the at least one computing unit may allow parallel computing, meaning that an absolute start time of at least two computation jobs of the plurality of computation jobs may be identical if the at least two computation jobs are assigned to at least two different computing units of the at least one computing unit. The assignment to the respective computing unit may comprise an assignment to a respective processor and/or processing core of the respective computing unit. In case a number of the at least one computing unit is exactly one, the assignment to the respective computing unit may consist of the assignment to the respective processor and/or processing core of the respective computing unit.

An advantage of the invention is that the job schedule is generated with a dynamic approach and that the estimation of the at least one computation resource depends on historic information. A degree of fulfillment of a punctual execution of the plurality of computation jobs may significantly rise with an improved estimation as described above. Additionally, the at least one computing unit may be utilized evenly during execution of the plurality of computation jobs. A number of computing units which exceeds the required number of computing units may be easily identified and removed from the computation system, for example in order to save cost. The described computer-implemented method may be especially suitable as the plurality of computation jobs may include recurrent types and the estimation of the at least one computation resource may thus be similar to an actual at least one computation resource. The job schedule may also consider one-time type computation jobs and is thus flexible and adaptive.

According to several implementations, the at least one computing unit comprises two or more computing units and the job schedule comprises an assignment of each computation job of the plurality of computation jobs to a respective computing unit of the two or more computing units.

In other words, the computation system may comprise two or more computing units and the job schedule may comprise an assignment of each computation job to one of the two or more computing units.

Each computing unit of the two or more computing units may comprise, in particular, at least one available computation resource. For example, a first computing unit of the two or more computing units may provide the at least one available computation resource, and a part of the at least one available computation resource of the first computing unit may be different compared to the respective at least one available computation resource of a second computing unit of the two or more computing units.

The assignment of the respective computing unit for each computation job may consider the at least one respective computation resource of the computation job compared to the at least one available computation resource of the two or more computing units. In other words, each computation job may be assigned to a most suitable computing unit of the two or more computing units.

In particular, each computing unit of the two or more computing units may be configured to execute computation jobs in parallel to each other computing unit, meaning that every computing unit may receive an individual computation job of the plurality of computation jobs for execution at the same time or during overlapping time periods.

An advantage of such implementations is that the job schedule can be further optimized considering the required at least one computation resource and assigning the respective computation job to a suitable computing unit of the two or more computing units.

According to several implementations, estimating the at least one respective computation resource for each computation job of the plurality of computation jobs comprises comparing each set of characteristics of the plurality of sets of characteristics to the historic set of characteristics of each historic dataset of the at least one historic dataset. Additionally, estimating comprises identifying a respective historic reference dataset for each computation job of the plurality of computation jobs depending on a result of the comparing. Furthermore, estimating comprises estimating the at least one respective computation resource for each computation job of the plurality of computation jobs depending on the at least one historic computation resource of the respective historic reference dataset.

In other words, the historic set of characteristics of the respective historic reference dataset may be identical or similar to the set of characteristics of the respective computation job. In particular, at least a part of the respective historic set of characteristics may be similar or identical to the respective set of characteristics of the computation job. The respective historic reference dataset may be one dataset of the at least one historic dataset, which refers to a historic computation job similar to the respective computation job. In this case, the respective historic reference dataset and the respective computation job may be of a recurrent type and may for example share a similar calculation method or category. Thus, the required at least one computation resource may be similar between the two.

In particular, it may occur that the historic set of characteristics of the respective historic reference dataset is not identical to the set of characteristics of the respective computation jobs. In this case, the estimation of the at least one computation resource may be based on the at least one respective historic computation resource of the historic reference dataset and may be extrapolated.

An advantage of such implementations is that the estimation of the at least one respective computation resource may be more precise as the historic reference dataset is identified according to the set of characteristics of the respective computation job. Especially for recurrent computation jobs, the described implementations may lead to an improved estimation and thus to an improved job schedule as the computation system offers historic information about historic computation jobs, which may only have minor differences compared to the respective computation job.

According to several implementations estimating the at least one respective computation resource for each computation job of the plurality of computation jobs comprises generating a respective confidence level for the at least one respective computation resource and the job schedule is generated depending on the generated confidence levels.

In particular, the priority ranking for each computation job of the plurality of computation jobs and/or the assignment of each computation job of the plurality of computation jobs to the respective computing unit of the at least one computing unit may depend on the generated confidence level.

The confidence level for the at least one respective computation resource may for example correspond to one of at least two categories of confidence, in particular at least three categories, which may be referred to as a high confidence, a medium confidence and a low confidence. In particular, each of the at least on respective computation resource may be assigned to an individual confidence level. For example, if the at least one respective computation resource comprise a computation time, a high confidence level may indicate that the estimation of the computation time may be considered very reliable. The medium confidence level may indicate for example that the computation time estimation may be less precise and a low confidence level may indicate that the computation time estimation is relatively uncertain and that an actual computation time may vary significantly.

An advantage of such implementations is that the estimation of the at least one respective computation resource is improved by the implementation of the confidence level. The available information within the computation system is made more precise by the implementation of the confidence level and the extrapolation of the at least one respective computation resource may be weighted with the confidence level. This may in consequence lead to an improved job schedule, which takes the confidence level of the estimation into account.

According to several implementations, for each historic dataset of the at least one historic dataset, the at least one historic computation resource comprises a historic computation time consumed for executing the historic computation job, a historic computation memory assigned to the respective historic computation job, a historic data bandwidth assigned to the respective historic computation job, a historic number of processing cores assigned to the respective historic computation job and/or a historic processor type assigned to the respective historic computation job.

According to several implementations the at least one computation resource comprises a computation time required for executing the respective computation job, a computation memory required for executing the respective computation job, a data bandwidth required for executing the respective computation job, a number of processing cores required for executing the respective computation job and/or a processor type required for executing the respective computation job.

Each historic computation resource of the at least one historic computation resource may have been determined based on an execution of the respective historic computation job. Thus, a reliability level of the at least one historic computation resource may be high and the at least one historic dataset may serve as a reliable basis for the estimation of the at least one respective computation resource.

In particular, a number of the at least one historic computation resource and a number of the at least one computation resource may be identical and comprise identical resource categories. An advantage of such implementations is that a comprehensive overview of system requirements may be available after completion of the estimation of the at least one respective computation resource. The job schedule may be improved in terms of on-time execution of each computation job when the at least one computation resources of the plurality of computation jobs are described in the above-mentioned manner.

According to several implementations the method comprises forecasting a load of the computation system for a predefined time period depending on the estimated at least one computation resources of the plurality of computation jobs. Furthermore, the job schedule is generated depending on the load of the computation system.

In particular, the priority ranking for each computation job of the plurality of computation jobs and/or the assignment of each computation job of the plurality of computation jobs to the respective computing unit of the at least one computing unit is generated depending on the load of the computation system.

The load of the computation system may be understood as an operational load or a workload of the computation system, for example the load of the computation system may comprise a unit load of each computing unit of the at least one computing unit. For example, if the unit load of each computing unit of the at least one computing unit is high at a point in time, the respective computing unit may not be capable for execution an additional computation job at the point in time.

The computation system may be configured to run and/or execute a plurality of other computation jobs and/or a plurality of other tasks and the load of the computation system may comprise forecasting a load of the plurality of other computation jobs and/or the plurality of other tasks. Thus, the load of the computation system may be referred to as a total system load of the computation system. The plurality of other computation jobs may comprise a plurality of action triggered computation jobs, a plurality of sporadic computation jobs or a plurality of periodic computation jobs.

The forecasting of the load of the computation system may be used for optimization of the computation system, for example for an activation or a deactivation of a number of the at least one computing unit. The predefined time period may be selected according to for example a time period of one of the plurality of computation jobs, in particular, according to the longest time period of execution one of the plurality of computation jobs. The predefined time period may be a specific time of a day and/or a specific day of a week and/or a relative time, for example "within the next 20 minutes".

The load of the computation system may be an indicator for a capability of the computation system to accept a further computation job.

According to several implementations, the at least one computing unit comprises at least one virtual machine, wherein each virtual machine of the at least one virtual machine comprises a configuration. The method comprises adjusting a number of the at least one virtual machine and/or adjusting the configuration of each virtual machine of the at least one virtual machine depending on the job schedule and/or depending on the load of the computation system.

An advantage of such implementations is that a user or an administrator of the computation system may receive a comprehensive overview of a load situation and may react accordingly for example by adding or subtracting an additional computing unit to the at least one computing unit. This may lead to an improved on-time execution of the plurality of computation jobs and/or this may lead to a reduction of the cost for the maintenance of the computation system, for example by reducing the number of the at least one computing unit to the minimum required number of computing units.

According to a further aspect of the invention, a computer-implemented method for executing a plurality of computation jobs within a computation system is provided. The method comprises carrying out the computer-implemented method for scheduling a plurality of computation jobs as described above. Additionally, the method comprises executing the plurality of computation jobs on the computation system according to the job schedule.

In particular, the method comprises executing the plurality of computation jobs on the at least one computing unit of the computation system.

For example, the executing of the plurality of computation jobs may comprise starting each computation job according to the priority ranking and/or starting each computation job on the respective computing unit, which has been assigned to the respective computation job.

An advantage of the further aspect of the invention is that the method may cover a broad processing cycle of the computation system, as the executing of the plurality of computation jobs is included in the computer-implemented method.

According to several implementations, the method comprises monitoring a progress of the executing of the plurality of computation jobs. Furthermore, the method comprises adjusting the job schedule depending on the progress. Additionally, the method comprises proceeding the execution of the plurality of computation jobs on the computation system according to the adjusted job schedule.

In other words, the method comprises a feedback loop in terms of the monitoring of the progress of the execution. Within the feedback loop, the estimated at least one respective computation resource may for example be validated with the actual progress of the executing. If there is a significant difference between the estimation of the at least one respective computation resource and the progress, there may be a necessity to adjust the job schedule. For example, if the progress of the execution of a first computation job exceeds the estimation of the at least one computation resource of the respective computation job, meaning that the respective computation job requires for example less time than estimated, the respective computing unit may be capable of executing a further computation job of the plurality of computation jobs.

For example, adjusting the job schedule may comprise adjusting the priority ranking of at least one computation job of the plurality of computation jobs and/or adjusting the assignment to the respective computing unit for at least one computation job of the plurality of computation jobs. In other words, the generation of the job schedule may be considered as an adaptive generation of the job schedule. In particular, the adjusted job schedule may in some cases be identical to the job schedule. This may be due to a high accuracy of the estimation of the respective at least one computation resource.

An advantage of such implementations is that the job schedule may be adjusted according to the progress of the execution of the plurality of computation jobs. This may lead to a selfcorrective generation of the job schedule and thus to an optimized execution of the plurality of computation jobs. For example, this may lead to an avoidance of keeping a part of the at least one computing unit in an idle state, even though the job schedule has not been completed yet.

According to several implementations, the method comprises for each computation job of the plurality of computation jobs determining at least one actual computation resource assigned to the respective computation job and generating a further dataset for each computation job of the plurality of computation jobs wherein the further dataset comprises the set of characteristics of the respective computation job and the at least one actual computation resource of the respective computation job. Additionally, the method comprises estimating at least one respective further computation resource for each further computation job of a plurality of further computation jobs depending on a further set of characteristics of the respective further computation job, depending on the at least one historic dataset and depending on the further dataset. Furthermore, the method comprises generating a further job schedule depending on the estimated at least one further computation resources of the plurality of further computation jobs, wherein the further job schedule comprises a further priority ranking for each further computation job of the plurality of further computation jobs and/or the further job schedule comprises a further assignment of each further computation job of the plurality of further computation jobs to a respective computing unit of the at least one computing unit.

In other words, the estimation of the at least one respective further computation resource is improved with a completion of each computation job, meaning that a basis of the estimation is expanded by the generation of the further dataset of each computation job. A total number of datasets is increased by the further dataset.

In particular, the method may comprise executing the plurality of further computation jobs on the computation system according to the further job schedule.

An advantage of such implementations is that the basis of information for the estimation of the at least one respective further computation resource is increasing within each completion of a computation job. In consequence, an accuracy of the estimation of the at least one respective further computation resource may increase and the further job schedule is optimized in terms of an increased on-time execution of each further computation job and an increased reliability of the further job schedule.

According to several implementations, estimating the at least one respective computation resource for each computation job of the plurality of computation jobs comprises applying a trained machine learning model (MLM) to input data depending on or comprising the set of characteristics of the respective computation job of the plurality of computation jobs and the at least one historic dataset.

A trained MLM can be understood as an algorithm, in particular a computer-implemented algorithm, which can reproduce functions that are possible through human intellectual performance concretely or in a broader sense. A trained MLM can also be referred to as a "trained function", for example. A trained MLM may be implemented in software and/or in hardware.

When training an MLM, parameters of the MLM are generally adjusted or updated. The training may be supervised, semi-supervised or unsupervised. The training may also include reinforcement learning or representation learning and/or other known training methods. In particular, the parameters of the MLM can be adapted iteratively over several training steps. In particular, a predefined loss function and/or a predefined fitness function and/or a predefined cost function can be minimized for training. If the MLM is an artificial neural network, ANN, a backpropagation algorithm may be used to adjust the parameters, for example.

In particular, the MLM may include an ANN, a support vector machine, a k-means clustering algorithm, a decision tree, and so on. In particular, an ANN may be or include a deep neural network and/or a convolutional neural network, CNN, in particular a deep CNN, and/or a recurrent neural network, RNN, in particular a recurrent CNN, and/or a transformer network and/or a generative adversarial network, GAN.

An advantage of such implementations is that the estimation of the at least one respective computation resource may be enhanced by the trained MLM and the accuracy of the estimation may be increased. A processing time of the estimation may be reduced.

According to several implementations, the MLM is an estimating agent for estimating the at least one respective computation resource for each computation job of the plurality of computation jobs, wherein the estimating agent is or has been trained by using reinforcement learning.

According to a further aspect of the invention a computer-implemented training method for training an estimating agent for estimating the at least one respective computation resource for each computation job of the plurality of computation jobs in a computer-implemented method for scheduling a plurality of computation jobs according to the invention by reinforcement learning based on a plurality of training scenarios is provided. Each training scenario is characterized by a set of characteristics of a training computation job and at least one historic training dataset. Each historic dataset comprises a historic training set of characteristics of a respective historic training computation job and at least one historic computation resource assigned to the respective historic training computation job. For each training scenario the method comprises estimating the at least one computation resource for the training computation job by the estimating agent based in a reinforcement learning policy depending on the set of characteristics of the training computation job and on the at least one historic training dataset. Additionally, the method comprises for each training scenario determining at least one value of a predefined reward function for the estimated at least one computation resource and updating the reinforcement learning policy depending on the at least one value of the predefined reward function, wherein the predefined reward function depends on a deviation of the estimated at least one computation resource from a predetermined at least one actual computation resource.

In particular, training the estimating agent may correspond to training the MLM. Thus, the trained MLM may comprise or consist of the trained estimating agent.

The training method may be performed previously to the scheduling of the plurality of computation jobs, for example the training method may be denoted as an offline training. The training estimating agent may enhance the accuracy of the estimating of the at least one computation resource. Additionally, the trained estimating agent and thus the trained MLM may be used repeatedly also for different sets of computation jobs to be scheduled and/or for scheduling on different computation systems without a necessity to repeat the training method.

According to several implementations of the computer-implemented method for scheduling a plurality of computation jobs, the estimating of the at least one respective computation resource for each computation job of the plurality of computation jobs is carried out by an estimating agent which is trained according to the computer-implemented training method.

In other words, the computer-implemented method for scheduling a plurality of computation jobs comprises the steps for training the estimating agent.

An advantage of such implementations is an increased accuracy of the estimation of the at least one respective computation resource.

According to several implementations, the computer-implemented method comprises training of the estimating agent and the training comprises determining at least one value of a further predefined reward function and updating the reinforcement learning policy depending on the at least one value of the further predefined reward function, wherein the further predefined reward function depends on a deviation of the estimated at least one computation resource from the actual computation resource.

In other words, the method may comprise an online learning approach for the estimating agent. Thus, a result of carrying out the method may additionally be an improved estimating agent.

An advantage of such implementations is, that the method may increase the accuracy of the estimation of the at least on respective computation resource when carried out at least a second time and/or continuously.

According to a further aspect of the invention, a data processing system is provided, which is configured to carry out a computer-implemented method according to the invention.

According to several implementations the data processing system is configured to carry out a computer-implemented method according to the invention, wherein the data processing system comprises the computation system.

Further implementations of the data processing system according to the invention follow directly from the various embodiments of the computer-implemented method according to the invention and vice versa. In particular, individual features and corresponding explanations as well as advantages relating to the various implementations of the computer-implemented method according to the invention can be transferred analogously to corresponding implementations of the data processing system according to the invention.

According to a further aspect of the invention, a first computer program product comprising first instructions is provided. When the first instructions are executed by a data processing system, the first instructions cause the data processing system to carry out a computer-implemented method according to the invention.

The first computer program product may for example be a first computer program comprising the first instructions or a computer readable storage medium, in particular a tangible non-transient computer readable storage medium, which stores the first computer program.

According to a further aspect of the invention, a second computer program product comprising second instructions is provided. When the second instructions are executed by a further data processing system, the second instructions cause the further data processing system to carry out a computer-implemented training method according to the invention.

The second computer program product may for example be a second computer program comprising the second instructions or a computer readable storage medium, in particular a tangible non-transient computer readable storage medium, which stores the second computer program.

The first and/or second instructions may be provided as program code, for example. The program code can, for example, be provided as binary code or assembler and/or as source code of a programming language, for example C, and/or as program script, for example Python.

Further features and feature combinations of the invention are obtained from the figures and their description as well as the claims. In particular, further implementations of the invention may not necessarily contain all features of one of the claims. Further embodiments of the inventions may comprise features or combinations of features, which are not recited in the claims.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
FIG 1 shows a schematic flow diagram of an exemplary implementation of a computer-implemented method for scheduling a plurality of computation jobs according to the invention; and
FIG 2 shows a schematic flow diagram of a further exemplary implementation of a computer-implemented method for scheduling a plurality of computation jobs according to the invention; and
FIG 3 shows a schematic flow diagram of an exemplary implementation of a computer-implemented training method for training an estimating agent according to the invention; and
FIG 4 shows a schematic flow diagram of a further exemplary implementation of a computer-implemented method for scheduling a plurality of computation jobs according to the invention.

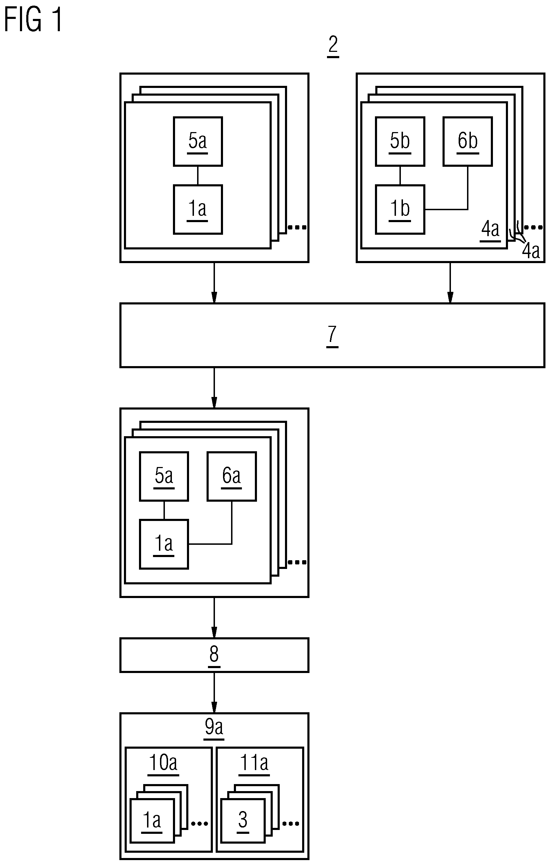

FIG 1 schematically shows aspects of an exemplary implementation of the computer-implemented method for scheduling a plurality of computation jobs 1a within a computation system 2 comprising at least one computing unit 3 according to the invention. Therein, the computer-implemented method comprises providing at least one historic dataset 4a, wherein each historic dataset 4a of the at least one historic dataset 4a comprises a historic set of characteristics 5b of a respective historic computation job 1b and at least one historic computation resource 6b assigned to the respective historic computation job 1b. The method additionally comprises providing a plurality of sets of characteristics 5a, wherein each set of characteristics 5a describes one computation job 1a of the plurality of computation jobs 1a. Furthermore, the method comprises estimating 7 at least one respective computation resource 6a for each computation job 1a of the plurality of computation jobs 1a depending on the set of characteristics 5a of the respective computation job 1a and on the at least one historic dataset 4a. In addition, the method comprises generating 8 a job schedule 9a depending on the estimated at least one computation resources 6a of the plurality of computation jobs 1a, wherein the job schedule 9a comprises a priority ranking 10a for each computation job 1a of the plurality of computation jobs 1a and/or the job schedule 9a comprises an assignment 11a of each computation job 1a of the plurality of computation jobs 1a to a respective computing unit 3 of the at least one computing unit 3.

The job schedule 9a may for example be a list, which comprises one line for each computation job 1a and a plurality of columns. The list may comprise an identification number of the respective computation job 1a, the priority ranking 10a of the respective computation job 1a and the assignment 11a to a respective computing unit 3. The list may additionally comprise for example a relative start time of the respective computation job 1a, an absolute start time of the respective computation job 1a, the computation resource 6a of the respective computation job 1a and/or the respective set of characteristics 5a of the respective computation job 1a. In particular, when the at least one computing unit 3 comprises two or more computing units 3, the job schedule 9a may also show an identical relative start time and/or an identical absolute start time for two or more computation jobs 1a of the plurality of computation jobs 1a as an execution of the two or more computation jobs 1a may start in parallel on the two or more computing units 3. Same may apply to an execution on two or more processors or processor cores.

The at least one computing unit 3 may comprise at least one physical machine or alternatively at least one virtual machine or a combination of the at least one physical machine and the at least one virtual machine. The at least one virtual machine may run within a cloud infrastructure. A number of the at least one virtual machine may be configurable and may change over time.

The plurality of sets of characteristic 5a may also be referred to as metadata for the plurality of computation jobs 1a. An increased number of entries within each set of characteristics 5a in combination with an increase number of entries within each historic set of characteristics 5b may enhance the estimating 7 of the at least one respective computation resource 6a.

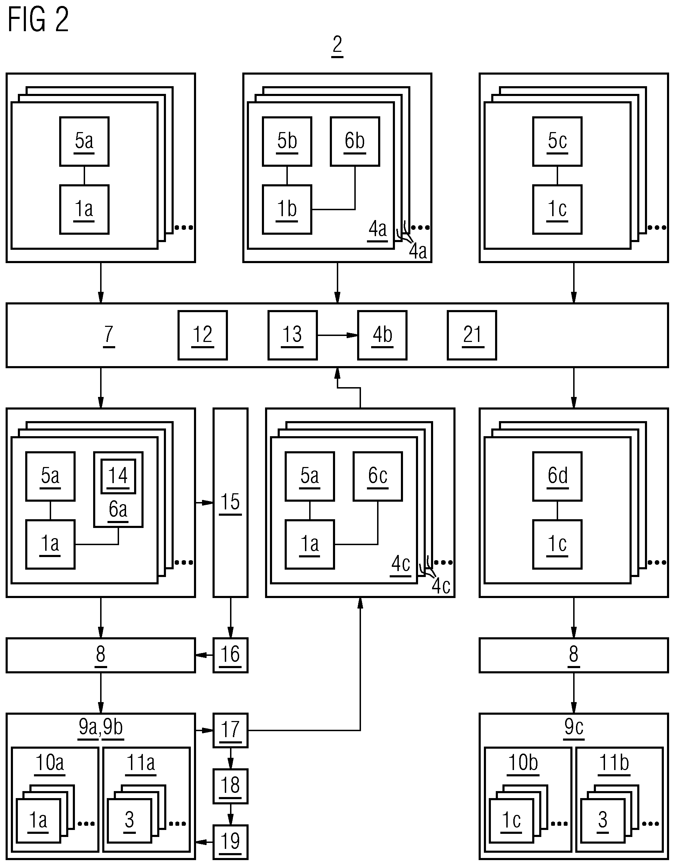

FIG 2 schematically shows a further exemplary implementation of the computer-implemented method for scheduling a plurality of computation jobs 1a. The estimating 7 comprises comparing 12 each set of characteristics 5a to the historic set of characteristics 5b of each dataset 4a. Additionally the method comprises identifying 13 a respective historic reference dataset 4b for each computation job 1a depending on a result of the comparing 12. The historic reference dataset 4b may be referred to as a similar or identical dataset to the respective computation job 1a. The estimating 7 of the at least one computation resource 6a may base on the at least one historic computation resource 6b of the respective historic reference dataset 4b. In addition one or more value of the at least one computation resource 6a may be extrapolated from one or more value of the at least one historic computation resource 6b, thus both values may vary from each other.

The estimating 7 may comprise generating a respective confidence level 14 of the respective computation resource 6a and the job schedule 9a may be generated depending on the confidence level 14. A small deviation from the respective set of characteristics 5a from the respective historic set of characteristics 5b of the historic reference dataset 4b may lead to a high confidence level 14 as the related computation jobs 1a are similar. On the other hand a large deviation from these values may lead to a low confidence level 14 as the related computation jobs 1a may show significant differences. The estimating 7 of the at least one computation resource 6a of such a computation job 1a may be significantly less reliable than of a similar computation job 1a.

Generating the job schedule 9a may also depend on a load 16 of the computation system 2. The load 16 may have been determined for a predefined time period depending on the estimated at least one computation resources 6a of the plurality of computation jobs 1a. The load 16 may be a global value for the computation system 2 and/or a value for each computing unit 3 of the at least one computing unit 3. The load 16 may for example be referred to as a sum of the at least one computation resources 6a of the plurality of computation jobs 1a in relation to an available computation resource of the computation system 2. A fully loaded computation system may for example not be able to execute an additional computation job 1a within the predefined time period.

In at least a further implementation, the method comprises executing 17 the plurality of computation jobs 1a on the computation system 2 according to the job schedule 9a. The executing 17 may be carried out by the at least one computing unit 3, wherein each computation job 1a may be executed on one computing unit 3 of the at least one computing unit 3. A sequence of starts of the computation jobs 1a may be defined by the priority ranking 10a, wherein at least two computation jobs 1a of the plurality of computation jobs 1a may start at the same time, in particular if started on at least two different computing units 3.

The executing 17 may be dynamical across the at least one computing unit 3, meaning that a first part of each computation job 1a may be executed on a first computing unit 3 of the at least one computing unit 3 and a second part of the respective computation job 1a may be executed on a second computing unit 3 of the at least one computing unit 3. This may be caused by a different required at least one computation resource 6a in the first part compared with the second part.

In particular, in case the at least one computing unit 3 comprises the at least one virtual machine, a total number of at least one computing unit 3 may vary over time. The at least one virtual machine may be provided within the cloud infrastructure. The total number may vary depending on the load 16, on the time of day, on the week day and/or on a usage fee of the at least one virtual machine. It may be beneficial to reduce the total number to a minimum number of the least one computing unit 3 in order to safe cost.

FIG 2 also shows a monitoring 18 or a progress 19 of the executing 17 of the plurality of computation jobs 1a. The monitoring 18 may be referred to as a feedback loop for the estimating of the at least one computation resource 6a and/or as a status information for a user of the computing system 2 or for other applications within the computation system 2. The progress 19 may be provided by the computation system 2 for example to a further data processing system.

The monitoring 18 may comprise determining a completion of the executing 17 of each computation job 1a. Thus, the computing system 2 may determine at least one actual computation resource 6c, which has actually been spent for the executing 17. The at least one actual computation resource 6c may be determined after the completion of each computation job 1a. For example, an actual computation time of each computation job 1a may be determined by subtracting a start time of the respective computation job 1a from a completion time of the respective computation job 1a. Same may apply to other types of the at least one computation resource 6a. Comparing the estimation of the at least one computation resource 6a to the at least one actual computation resource 6c may be understood as a verification process of the method.

Additionally, the job schedule 9a may be adjusted depending on the progress 19 of the monitoring 18. This may for example be advantageous or necessary, if the estimation of the at least one computation resource 6a comprises a deviation to the at least one actual computation resource 6c. In consequence, the job schedule 9a for a remaining part of the plurality of computation jobs 1a may be adjusted. In particular, the remaining part may not include completed computation jobs 1a. The adjusting may comprise adjusting the priority ranking 10a and/or adjusting the assignment 11a to the respective computing unit 3. Subsequently, the method may comprise proceeding the execution of the remaining part of the plurality of computation jobs 1a according to the adjusted job schedule 9b.

The method may comprise generating a further dataset 4c, which comprises the set of characteristics 5a and the at least one actual computation resource 6c of one computation job 1a after completion of the respective computation job 1a. The estimating 7 of a respective further computation resource 6d of a plurality of further computation jobs 1c may depend on the further set of characteristics 5c of the respective further computation job 1c, the at least one historic dataset 4a and the further dataset 4c. Thus, the method may include a continuous increase of a total number of datasets, as with every completion of an additional computation job 1a, the total number of datasets may increase by one dataset. The method may comprise generating 8 a further job schedule 9c depending on the estimated at least one further computation resources 6d of the plurality of further computation jobs 1c. The further job schedule 9c may comprise a further priority ranking 10b of the plurality of further computation jobs 1c and/or a further assignment 11b of the plurality of further computation jobs 1c to a respective computing unit 3 of the at least one computing unit 3.

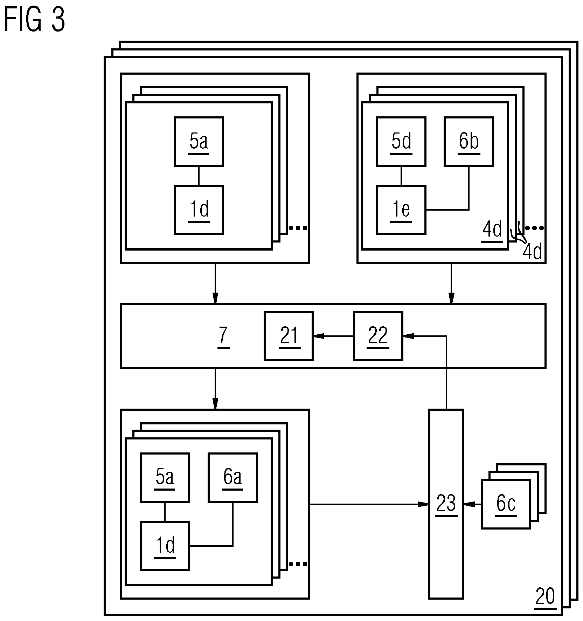

FIG 2 also shows an exemplary implementation, in which the estimating 7 may be carried out by a trained estimating agent 21 trained by reinforcement learning. For a training method of such an estimating agent 21, FIG 3 may be considered.

FIG 3 shows an exemplary implementation of a computer-implemented training method for training an estimating agent 21 for estimating 7 the at least one respective computation resource 6a for each computation job 1a of the plurality of computation jobs 1a in a computer-implemented method according to the invention by reinforcement learning based on a plurality of training scenarios 20. Each training scenario 20 is characterized by a set of characteristics 5a of a training computation job 1d and at least one historic training dataset 4d. Each historic training dataset 4d comprises a historic training set of characteristics 5d of a respective historic training computation job 1e and at least one historic computation resource 6b assigned to the respective historic training computation job 1e. The method comprises, for each training scenario 20, estimating 7 the at least one computation resource 6a for the training computation job 1d by the estimating agent 21 based on a reinforcement learning policy 22 depending on the set of characteristics 5a of the training computation job 1d and on the at least one historic training dataset 4d. Furthermore, for each training scenario 20 the method comprises determining at least one value of a predefined reward function 23 for the estimated at least one computation resource 6a and updating the reinforcement learning policy 22 depending on the at least one value of the predefined reward function 23, wherein the predefined reward function 23 depends on a deviation of the estimated at least one computation resource 6a from a predetermined at least one actual computation resource 6c.

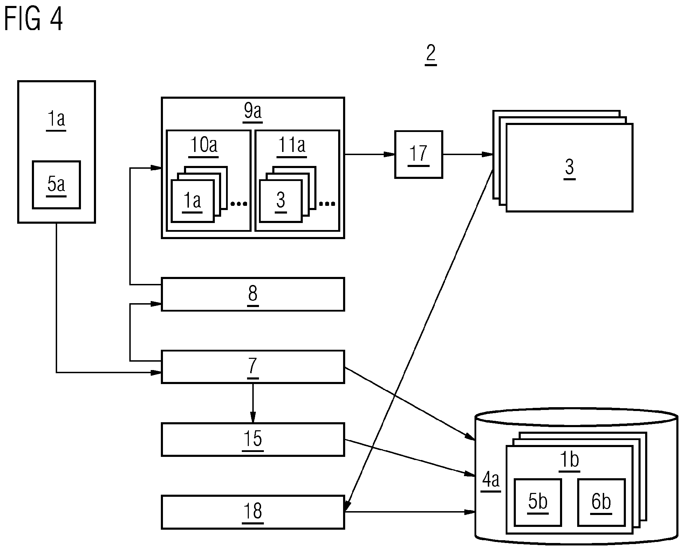

FIG 4 shows a further schematic view of an exemplary implementation of the invention. In particular, part of the features described with respect to FIG 1 and FIG 2 may apply to the further schematic view of FIG 4, especially all features of FIG 1 and FIG 2 may apply to the further schematic view of FIG 4.

In several implementations, the invention employs a continuous, adaptive virtual machine reconfiguration and provisioning based on learnt patterns of computation resource usage and time-distribution of jobs to meet expected future demands.

In several implementations, the invention offers the possibility to use more powerful virtual machine configurations, in particular compared to the minimal job requirements, if sufficient computation resources are available and free during a forecasted execution duration.

In several implementations, the invention offers the possibility to delay the execution of a computation job, in particular if higher-priority action-triggered jobs are expected to arrive during the execution of the job.

Independent of the grammatical term usage, individuals with male, female or other gender identities are included within the term.

### List of Reference

- 1a: computation job
- 1b: historic computation job
- 1c: further computation job
- 1d: training computation job
- 1e: historic training computation job
- 2: computation system
- 3: computing unit
- 4a: historic dataset
- 4b: historic reference dataset
- 4c: further dataset
- 4d: historic training dataset
- 5a: set of characteristics
- 5b: historic set of characteristics
- 5c: further set of characteristics
- 5d: historic training set of characteristics
- 6a: computation resource
- 6b: historic computation resource
- 6c: actual computation resource
- 6d: further computation resource
- 7: estimating
- 8: generating
- 9a: job schedule
- 9b: adjusted job schedule
- 9c: further job schedule
- 10a: priority ranking
- 10b: further priority ranking
- 11a: assignment
- 11b: further assignment
- 12: comparing
- 13: identifying
- 14: confidence level
- 15: forecasting
- 16: load
- 17: executing
- 18: monitoring
- 19: progress
- 20: training scenario
- 21: estimating agent
- 22: reinforcement learning policy
- 23: predefined reward function

## Claims

1. Computer-implemented method for scheduling a plurality of computation jobs (1a) within a computation system (2) comprising at least one computing unit (3), wherein the method comprises the following steps:
- providing at least one historic dataset (4a), wherein each historic dataset (4a) of the at least one historic dataset (4a) comprises a historic set of characteristics (5b) of a respective historic computation job (1b) and at least one historic computation resource (6b) assigned to the respective historic computation job (1b);
- providing a plurality of sets of characteristics (5a), wherein each set of characteristics (5a) describes one computation job (1a) of the plurality of computation jobs (1a);
- estimating (7) at least one respective computation resource (6a) for each computation job (1a) of the plurality of computation jobs (1a) depending on the set of characteristics (5a) of the respective computation job (1a) and on the at least one historic dataset (4a); and
- generating (8) a job schedule (9a) depending on the estimated at least one computation resources (6a) of the plurality of computation jobs (1a), wherein the job schedule (9a) comprises a priority ranking (10a) for each computation job (1a) of the plurality of computation jobs (1a) and/or the job schedule (9a) comprises an assignment (11a) of each computation job (1a) of the plurality of computation jobs (1a) to a respective computing unit (3) of the at least one computing unit (3).

2. Computer-implemented method according to claim 1, wherein estimating (7) the at least one respective computation resource (6a) for each computation job (1a) of the plurality of computation jobs (1a) comprises
- comparing (12) each set of characteristics (5a) of the plurality of sets of characteristics (5a) to the historic set of characteristics (5b) of each historic dataset (4a) of the at least one historic dataset (4a);
- identifying (13) a respective historic reference dataset (4b) for each computation job (1a) of the plurality of computation jobs (1a) depending on a result of the comparing (12); and
- estimating (7) the at least one respective computation resource (6a) for each computation job (1a) of the plurality of computation jobs (1a) depending on the at least one historic computation resource (6b) of the respective historic reference dataset (4b).

3. Computer-implemented method according to one of the preceding claims, wherein
- estimating (7) the at least one respective computation resource (6a) for each computation job (1a) of the plurality of computation jobs (1a) comprises generating a respective confidence level (14) for the at least one respective computation resource (6a); and
- the job schedule (9a) is generated depending on the generated confidence levels (14).

4. Computer-implemented method according to one of the preceding claims, wherein
- for each historic dataset (4a) of the at least one historic dataset (4a), the at least one historic computation resource (6b) comprises a historic computation time consumed for executing the respective historic computation job (1b), a historic computation memory assigned to the respective historic computation job (1b), a historic data bandwidth assigned to the respective historic computation job (1b), a historic number of processing cores assigned to the respective historic computation job (1b) and/or a historic processor type assigned to the respective historic computation job (1b); and/or
- the at least one computation resource (6a) comprises a computation time required for executing the respective computation job (1a), a computation memory required for executing the respective computation job (1a), a data bandwidth required for executing the respective computation job (1a), a number of processing cores required for executing the respective computation job (1a) and/or a processor type required for executing the respective computation job (1a).

5. Computer-implemented method according to one of the preceding claims, wherein
- the at least one computing unit (3) comprises two or more computing units (3); and
- the job schedule (9a) comprises an assignment of each computation job (1a) of the plurality of computation jobs (1a) to a respective computing unit (3) of the two or more computing units (3).

6. Computer-implemented method according to one of the preceding claims, wherein
- the method comprises forecasting (15) a load (16) of the computation system (2) for a predefined time period depending on the estimated at least one computation resources (6a) of the plurality of computation jobs (1a); and
- the job schedule (9a) is generated depending on the load (16) of the computation system (2).

7. Computer-implemented method for executing (17) a plurality of computation jobs (1a) within a computation system (2), wherein the method comprises the following steps:
- carrying out the computer-implemented method according to one of the claims 1 to 6; and
- executing (17) the plurality of computation jobs (1a) on the computation system (2) according to the job schedule (9a).

8. Computer-implemented method according to claim 7, wherein the method comprises
- monitoring (18) a progress (19) of the execution (17) of the plurality of computation jobs (1a);
- adjusting the job schedule (9a) depending on the progress (19); and
- proceeding the execution of the plurality of computation jobs (1a) on the computation system (2) according to the adjusted job schedule (9b).

9. Computer-implemented method according to one of the claims 7 or 8, wherein the method comprises the following steps
- for each computation job (1a) of the plurality of computation jobs (1a), determining at least one actual computation resource (6c) assigned to the respective computation job (1a), and generating a further dataset (4c) for each computation job (1a) of the plurality of computation jobs (1a), wherein the further dataset (4c) comprises the set of characteristics (5a) of the respective computation job (1a) and the at least one actual computation resource (6c) of the respective computation job (1a);
- estimating (7) at least one respective further computation resource (6d) for each further computation job (1c) of a plurality of further computation jobs (1c) depending on a further set of characteristics (5c) of the respective further computation job (1c), depending on the at least one historic dataset (4a) and depending on the further datasets (4c); and
- generating (8) a further job schedule (9c) depending on the estimated at least one further computation resources (6d) of the plurality of further computation jobs (1c), wherein the further job schedule (9c) comprises a further priority ranking (10b) for each further computation job (1c) of the plurality of further computation jobs (1c) and/or the further job schedule (9c) comprises a further assignment (11b) of each further computation job (1c) of the plurality of further computation jobs (1c) to a respective computing unit (3) of the at least one computing unit (3).

10. Computer-implemented method according to one of the preceding claims, wherein estimating (7) the at least one respective computation resource (6a) for each computation job (1a) of the plurality of computation jobs (1a) comprises applying a trained machine learning model, MLM, to input data depending on or comprising the set of characteristics (5a) of the respective computation job (1a) of the plurality of computation jobs (1a) and the at least one historic dataset (4a).

11. Computer-implemented training method for training an estimating agent (21) for estimating (7) the at least one respective computation resource (6a) for each computation job (1a) of the plurality of computation jobs (1a) in a computer-implemented method according to one of the preceding claims by reinforcement learning based on a plurality of training scenarios (20), wherein each training scenario (20) is **characterized by** a set of characteristics (5a) of a training computation job (1d) and at least one historic training dataset (4d), each historic training dataset (4d) comprising a historic training set of characteristics (5d) of a respective historic training computation job (1e) and at least one historic computation resource (6b) assigned to the respective historic training computation job (1e), wherein the method comprises for each training scenario (20)
- estimating (7) the at least one computation resource (6a) for the training computation job (1d) by the estimating agent (21) based on a reinforcement learning policy (22) depending on the set of characteristics (5a) of the training computation job (1d) and on the at least one historic training dataset (4d); and
- determining at least one value of a predefined reward function (23) for the estimated at least one computation resource (6a) and updating the reinforcement learning policy (22) depending on the at least one value of the predefined reward function (23), wherein the predefined reward function (23) depends on a deviation of the estimated at least one computation resource (6a) from a predetermined at least one actual computation resource (6c).

12. Computer-implemented method according to one of the claims 1 to 10, wherein the estimation (7) of the at least one respective computation resource (6a) for each computation job (1a) of the plurality of computation jobs (1a) is carried out by an estimating agent (21), which is trained according to the computer-implemented training method according to claim 11.

13. Data processing system, which is configured to carry out a computer-implemented method according to one of claims 1 to 6.

14. Data processing system according to claim 13, which is configured to carry out a computer-implemented method according to one of claims 7 to 10, wherein the data processing system comprises the computation system (2).

15. Computer program product comprising
- first instructions, which, when executed by a data processing system, cause the data processing system to carry out a computer-implemented method according to one of claims 1 to 10; and/or
- second instructions, which, when executed by a further data processing system, cause the further data processing system to carry out a computer-implemented training method according to claim 11.
